# EUROPEAN PATENT SPECIFICATION

(11) **EP 1 164 457 B1**
(45) Date of publication and mention of the grant of the patent: **07.12.2005**
(21) Application number: 01113264.4
(22) Date of filing: 31.05.2001
(51) Int. Cl.: G06F 1/00

(54) **Authentication method of portable terminal**
Verfahren zur Beglaubigung eines tragbaren Endgerätes
Procédé d'authentification d'un terminal portable

(30) Priority: 31.05.2000 JP 2000162866
(43) Date of publication of application: 19.12.2001
(73) Proprietor: Net Village Co., Ltd., Hachioji-shi, Tokyo (JP)
(72) Inventor: Iida, Shoichi, Kawasaki-shi, Kanagawa-ken (JP)
(74) Representative: Goddar, Heinz J.

(56) References cited:
- WO-A-99/53391
- GB-A- 2 346 239
- US-A- 6 006 333

## Description

### Background of the Invention

### Field of the Invention

This invention relates to an authentication method of a portable terminal. More particularly, this invention relates to an authentication method of a portable terminal, which enables fast and easy access (log-in) to various kinds of servers that require user authentication and are provided on an information communication network constituted by either a public line network or a private line network such as the Internet.

### Description of the Prior Art

In recent years, by the progress of information communication networks such as the Internet, utilization of the Internet by operating information processing apparatuses having communication functions capable of access to the information communication networks such as personal computers have been increased. Portable terminals having functions capable of accessing the Internet are also appeared from among such portable terminals as mobile phones and PHS (Personal Handyphone System), that have been rapidly popular in these days and utilizing the Internet by these portable terminals is materially increased.

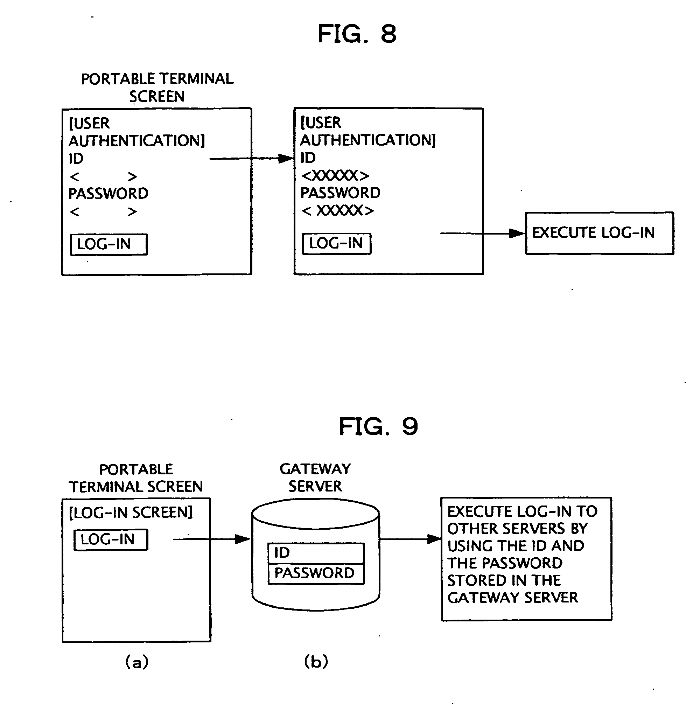

In the conventional way of utilizing the Internet from a portable terminal adaptable to Compact HTML (HTML 4.0 based) via a gateway server accessible by the portable terminal (Compact HTML-adaptable portable terminal) to either a server provided on the Internet or the above-mentioned gateway server (namely, gateway server equipped with predetermined server function) that require user authentication, accesses are carried out as shown in Figs. 8 and 9. Referring now to Figs. 8 and 9 showing the conventional authentication methods of the portable terminals, the more detailed description will be made hereinbelow.

According to the authentication method shown in Fig. 8, both an ID and a password of a user are entered on a display screen such as liquid crystal display and the like of a portable terminal so as to execute an authentication process. A screen (user authentication screen) shown in Fig. 8(a) to be used to log in (user authentication) a desired server is displayed on a display screen by operating the portable terminal. Then, both a predetermined ID and a predetermined password are entered as shown in Fig. 8(b). Subsequently, a character (icon or the like) of "log-in" shown on the display screen is selected by an operation of the portable terminal. When the log-in (authentication) process is completed normally, accesses to either the server or the gateway server, which are provided on the Internet, become possible.

However, in accordance with the above-mentioned conventional authentication method, in the case where both the ID and the password composed of complex character strings should be input in the portable terminal, the problem is that it takes a quite long time to input such ID and password and is very inefficient.

According to another authentication method shown in Fig. 9, accesses from a portable terminal to a desired server are performed via such a gateway server in which both an ID and a password of the user have been saved in advance, and authentication is carried out by the desired server by using the ID and the password saved in the gateway server. In other words, by an operation of the portable terminal, such a screen (user authentication screen) as shown in Fig. 9(a) used to log in the desired server is displayed, and then, a character (icon or the like) of "log-in" is displayed on the display screen. Whereby, both the ID and the password of the user which are saved in advance in the gateway server are sent to the desired server (another gateway server may be included), so that the log in (authentication process) this server may be executed. When the log-in (authentication) process is completed normally, accesses to either the desired server or another gateway server which is provided on the Internet, become possible.

However, in accordance with the above-mentioned conventional authentication method, the IDs and passwords of the users, that are previously stored into the gateway server, may be ripped off in case of intrusion by a cracker and the like, thereby a security problem may occur.

US-A-6 006 333 discloses an authentication method of a portable terminal according to the preamble of claim 1. A master password is used to decrypt a stored password for a particular remote server which the client desires access. The client system maintains a database of encrypted passwords and user IDs for remote servers to which the user is registered. Although each remote server is accessed using a different password, the user need only remember one master password. In case that the master password is cracked by hackers, the hackers are able to login in all of the servers.

### Summary of the Invention

Accordingly, an object of the present invention is to provide such an authentication method of a portable terminal, capable of improving securities of both an ID and a password, and also capable of logging in a desired server which requires authentication of a user, in a short time and in a simple manner.

This object is achieved by an authentication method according to claim 1.

Also, according to the present invention, the log-in information is composed of both a user ID and a password, which are used to log in said desired server.

Also, according to the present invention, contents of such data as the user ID, the password, and the key code, which have been registered in said memory in said portable terminal, are constituted in such a manner that said data contents cannot be observed from the outside of said portable terminal.

Also, according to the present invention, the key code is composed of a numeral having a plurality of digits.

Further, according to the present invention, said various kinds of servers which require said user authentication and are provided on the information communication network are connected via a gateway server to said portable terminal.

In the authentication method of portable terminal according to the present invention, since the contents of the log-in data such as the ID, the password, and the key code, which are saved as the screen memo in the Compact HTML-adaptable portable terminal, are not displayed on screen of portable terminal and cannot be observed from the outside, the higher security can be ensured. Also, the user can access the server which requires the user authentication by memely entering a key code set by the user himself/herself into the portable terminal.

### Brief Description of the Drawings

The invention will be explained in more detail in conjunction with appended drawings, wherein:
Fig. 1 is a block diagram showing an example of a system configuration when a Compact HTML-adaptable portable terminal directly accesses to a Web server or the like that requires user authentication;
Fig. 2 is a block diagram showing an example of a system configuration when a Compact HTML-adaptable portable terminal accesses via a gateway server to a POP server or the like, that requires user authentication;
Fig. 3 is a flow chart illustrating a screen memo registration process;
Fig. 4 is a diagram showing an example of screens displayed in the portable terminal while the screen memo registration process is carried out in the system shown in Fig. 1;
Fig. 5 is a diagram showing an example of screens displayed in the portable terminal while the screen memo registration process is carried out in the system shown in Fig. 2;
Fig. 6 is a flow chart illustrating a process of a simple log-in to a server which requires user authentication by utilizing a screen memo function;
Fig. 7 is a diagram showing an example of screens displayed in the portable terminal while a simple log-in process is performed in the systems shown in Figs. 1 and 2;
Fig. 8 is a diagram showing a conventional authentication method of the portable terminal; and
Fig. 9 is a diagram showing another conventional authentication method of the portable terminal.

### Detailed Description of the Preferred Embodiments

Referring to drawings, preferred embodiments of the present invention will be described below.

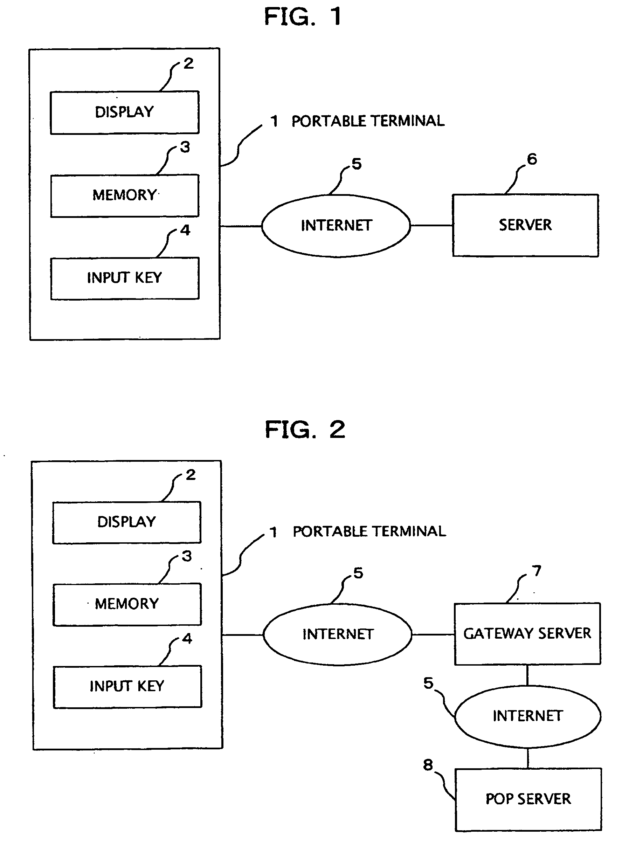

Figs. 1 and 2 are block diagrams showing examples of system configurations to implement a authentication method of a portable terminal according to the present invention.

Fig. 1 shows an example of a system configuration where a user directly accesses from a portable terminal adaptable to Compact HTML to a Web server or the like that requires user authentication. Fig. 2 shows an example of a system configuration where a user accesses from a portable terminal adaptable to Compact HTML via a gateway server to a POP server or the like that requires user authentication.

In the system shown in Fig. 1, a portable terminal 1 is provided with a display 2 for visually communicating various kinds of information to a user, a memory 3 for storing user information i.e. an ID, a password or the like necessary for an access to a server which requires user authentication, and an input key 4 for inputting data. The user information will also referred to as "log-in information" hereinafter, and the ID, the password or the like are specific to each of the servers. Moreover, the memory 3 implement a screen memo function, which will be explained later.

Furthermore, the portable terminal 1 is connected via the Internet 5 to a server 6 which require user authentication. It should also be noted that whereas only a server 6 is shown in Fig. 1 as a server which requires user authentication, a plurality of servers accessible by the portable terminal 1 are apparently available on the Internet 5. Although not shown in this drawing, the portable terminal 1 is connected to the Internet 5 via a base station of the portable terminal 1 and a gateway server provided therein.

Referring now to the system shown in Fig. 2, similar to the system shown in Fig. 1, a portable terminal 1 is provided with a display 2 for visually communicating various kinds of information to a user, a memory 3 for storing user information i.e. an ID, a password or the like necessary for an access to servers which require user authentication, the ID, the password or the like being specific to each server, and an input key 4 for inputting data. Moreover, the memory 3 implement a screen memo function, which will be explained later.

Furthermore, the portable terminal 1 is connected via the Internet 5, a gateway server 7, and again Internet 5 to a POP server 8 or the like that requires user authentication. Similar to the system shown in Fig. 1, it should also be noted that although not shown in this drawing, the portable terminal 1 is connected to the Internet 5 via a base station of the portable terminal 1 and a gateway server provided therein.

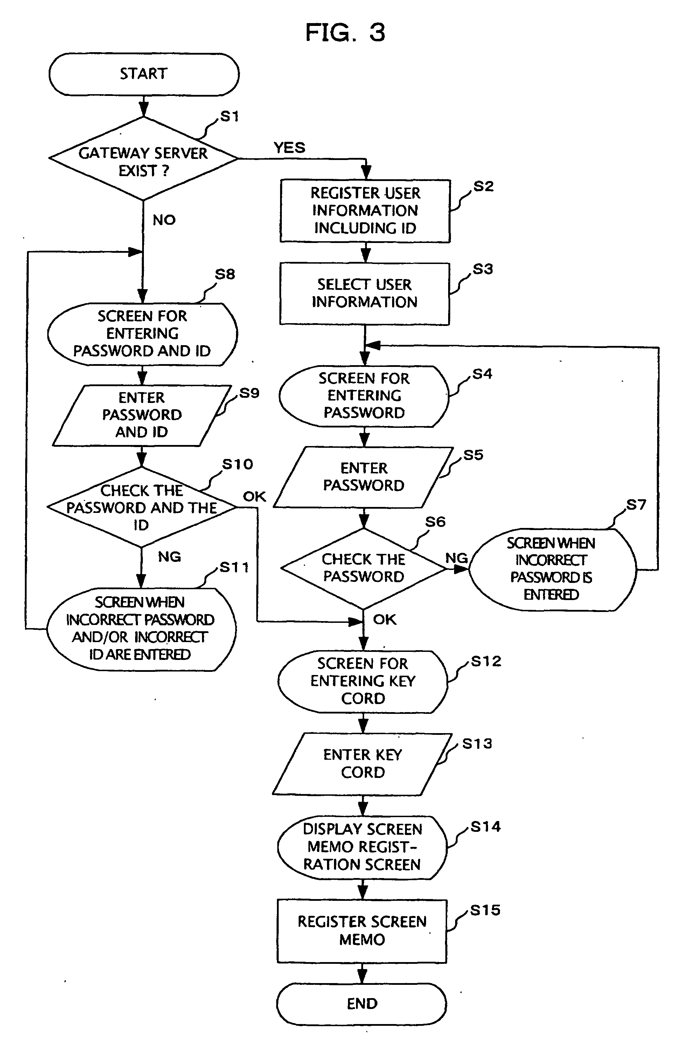

A description in detail will now be made of an authentication method (simple log-in) of a portable terminal according to the present invention, with reference to Figs. 3 to 7. The authentication method of the present invention is carried out by utilizing the screen memo function included in the portable terminal 1 (Compact HTML-adaptable portable terminal).

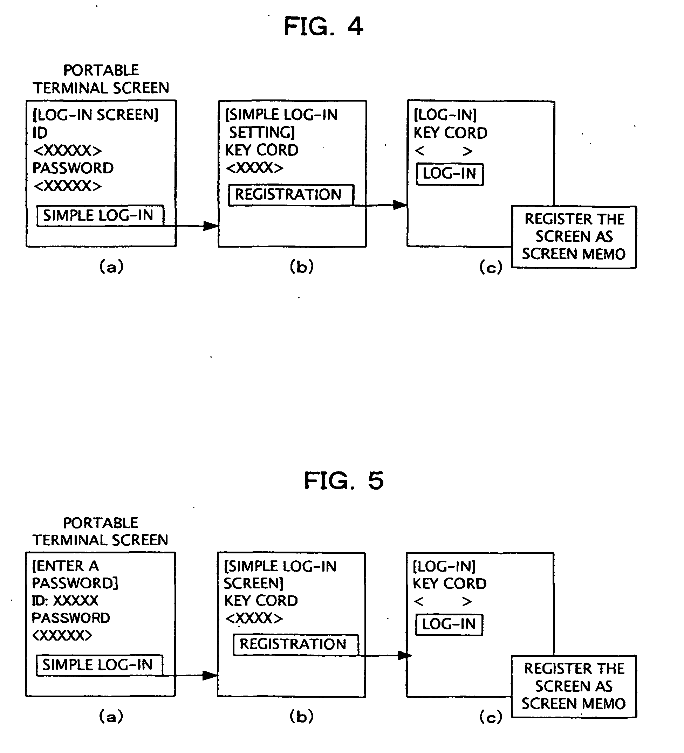

Referring to Figs. 3 and 4, a screen memo registration process (hereinafter also referred to as "simple log-in registration process") operated in the system shown in Fig. 1 will nowbe descbibed. Fig. 3 is a flow chart illustrating a screen memo registration process, and Fig. 4 is a diagram showing an example of screens displayed in the portable terminal while the screen memo registration process is carried out in the system shown in Fig. 1.

First, in response to an operation of the portable terminal 1, a log-in registration screen to be used to log in a desired server, that is, a screen for user authentication, is displayed on the display 2 (hereinafter also referred to as a "display screen") as shown in Fig. 4(a) (Step S1, S8). The log-in registration screen is displayed in the case where the log-in registration has not been established with respect to the desired server, for example. As shown in Fig. 4(a), both a predetermined ID and a predetermined password are entered by input key 4 (step S9). Then, a character (icon or the like) of "simple log-in" displayed on the screen is selected by operating the portable terminal 1.

In response to theselection, the portable terminal 1 accesses to the desired server (Web server, POP server, or the like) via the Internet 5. The server determines as to whether or not both the ID and the password entered at the step S9 are correct (authenticated) (step S10). If not authenticated by the server, a screen indicating a result that the entered ID/password are incorrect is displayed (step S11), and then, the screen is returned to the log-in registration screen shown in Fig. 4(a) (step S8).

When it is verified that both the ID and the password are correct by the server at step S10, a screen (key code input screen) shown in Fig. 4(b) is displayed on the display 2 (step S12). A key cord, e.g. an arbitrary numeral of four digits desired by a user is input by input key 4 (step S13) as shown in Fig. 4(b). Furthermore, when a character (icon or the like) of "registration" displayed on the screen is selected by an operation of the portable terminal 1, a screen shown in Fig. 4(c) is displayed (step S14). If a registration of the screen is selected by the screen memo function included in the portable terminal 1, the contents of the screen are stored into the memory 3 thereof (step S15).

As described above, the screen memo registration process in the system shown in Fig. 1 is carried out. Once the screen memo registration process has been performed, an easy access to the desired server on the Internet becomes possible. That is to say, when next time a log-in the server is attempted, a screen shown in Fig. 4(c) is initially displayed; the four-digit numeral described above is input by the input key 4; and then a character (icon or the like) of "log-in" displayed on the screen is selected by an operation of the portable terminal 1, whereby the access is complete.

Referring to Figs. 3 and 5, a description will now be made of a screen memo registration process (simple log-in registration process) carried out in the system shown in Fig. 2. Fig. 5 is a diagram showing an example of screens displayed in the portable terminal when the screen memo registration process is carried out in the system shown in Fig. 2.

The following description is made in the case where the screen memo registration process (simple log-in registration process) is carried out in the system shown in Fig. 2, wherein an access to the POP server 8 via the gateway server 7 is carried out so as to transmit/receive an electronic mail. For this purpose, it should be understood that a POP user ID and a POP server name have been stored as user information into the gateway server 7 in advance.

First, in response to an operation of the portable terminal 1, a log-in registration screen to be used to log in a desired server (POP server), that is, a screen for user authentication, is displayed on the display 2 (display screen) as shown in Fig. 5(a) (Step S1, S2, S3 and S4). The log-in registration screen is displayed in the case where the log-in registration has not been established with respect to the desired server, for example. As shown in Fig. 5(a), a predetermined password is entered by input key 4 (step S5). Then, a character (icon or the like) of the "simple log-in" displayed on the screen is selected by operating the portable terminal 1.

In response to the selection, the portable terminal 1 accesses to the desired server (POP server 8) via the Internet 5. The server determines as to whether or not the password entered at step S5 are correct (authenticated) (step S6). If not authenticated by the server, a screen indicating a result that the entered password is incorrect is displayed (step S7), and then, the screen is returned to the log-in registration screen shown in Fig. 5(a) (step S4).

When it is verified that the password is correct by the server at step S6, a screen (key code input screen) shown in Fig. 5(b) is displayed on the display 2 (step S12). A key cord, e.g. arbitrary numeral of four digits desired by a user is input by input key 4 (step S13) as shown in Fig. 5(b). Furthermore, when a character (icon or the like) of the "registration" displayed on the screen is selected by an operation of the portable terminal 1, a screen shown in Fig. 5(c) is displayed (step S14). If a registration of the screen is selected by the screen memo function included in the portable terminal 1, the contents of the screen are stored into the memory 3 thereof (step S15).

As described above, the screen memo registration process in the system shown in Fig. 1 is carried out. Once the screen memo registration process has been performed, an easy access to the desired server (POP server 8) on the Internet becomes possible. That is to say, when next time a log-in the server is attempted, a screen shown in Fig. 5(c) is initially displayed; the four-digit numeral described above is input by the input key 4; and then a character (icon or the like) of the "log-in" displayed on the screen is selected by an operation of the portable terminal 1, whereby the access is complete.

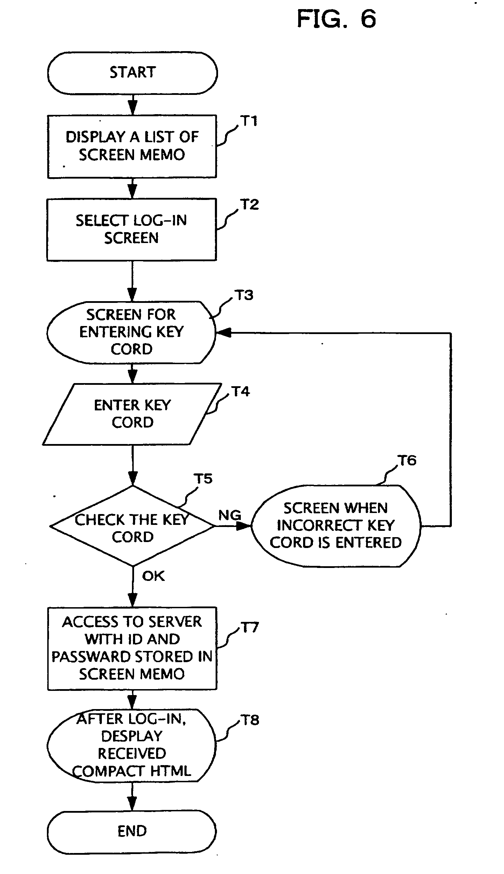

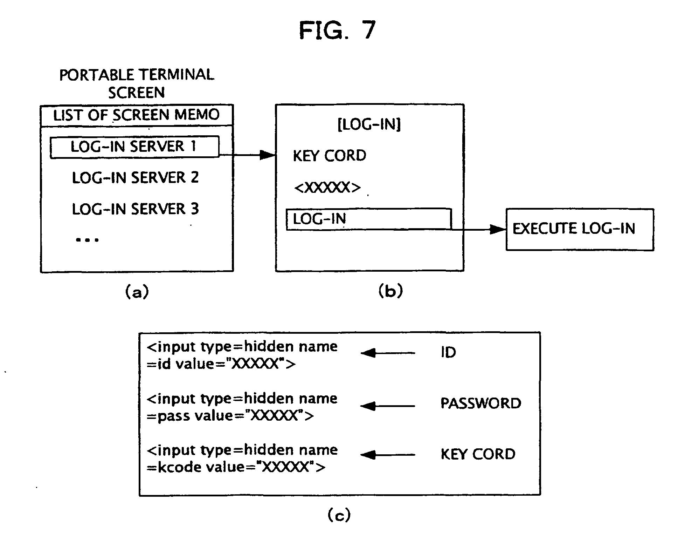

Next, referring to Figs. 6 and 7, a description will now be made of a simple log-in, by utilizing a screen memo, to a server which requires user authentication the systems shown in Figs. 1 and 2. Fig. 6 is a flow chart illustrating a process of simple log in the server which requires the user authentication by utilizing the screen memo, while Fig. 7 is a diagram showing an example of screens displayed in the portable terminal when the simple log-in process is carried out in the systems shown in Figs. 1 and 2. It should be understood that such user information to be used to log in a predetermined server as user IDs and user passwords that is specific to each server have been registered in the screen memo in advance, wherein the user information corresponds to a log-in server number and is described in Compact HTML.

First, in response to a selection of the screen memo function by operating the portable terminal 1, a registered screen memo list is displayed on the display 2 (display screen) as shown in Fig. 7(a) (step T1). A user selects a server number (icon or the like) of a server which the user desires to log in from the screen memo list (step T2).

In response to the selection, a key code input screen as shown in Fig. 7(b) is displayed (step T3). The user inputs, from the input key 4, a 4-digit numeral (key code) which is necessary to log in the desired server (log-in server number) and is identical to that having been registered in advance in the above-mentioned screen memo registration process (simple log-in registration process, and then operates the portable terminal 1 to select a character (icon or like) of the "log-in" displayed on the screen (step T4).

Subsequently, the portable terminal 1 determines as to whether or not the key code entered at step T4 is correct (namely, whether the key code is authenticated by the desired server) (step T5). In the case where the portable terminal determines that the key code is not correct, a screen indicating a result that the entered key code is incorrect is displayed (step T6), and then, the screen is returned to the key code input screen shown in Fig. 7(b) (step T3). It should be noted that the determination of the key cord at step T5 may be executed by either a server 6 or a gateway server 7.

When it is determined that the entered key code is correct at step T5, a log-in process to the server by using both an ID and a password corresponding to the above-mentioned key code and stored in the screen memo in advance is carried out (step T7). The portable terminal 1 displays Compact HTML received from the server on the display 2 after the log-in (step T8). It should also be noted that the above-mentioned key code, and both the ID and the password corresponding to the key code, are registered as the screen memo into the memory 3 of the portable terminal 1 in a Compact HTML format as shown in Fig. 7(c). In this case, these ID, password, and key code are defined in such a manner that these data contents are not to be displayed on the display 2 of the portable terminal 1.

As described above, the simple log-in process to the server which requires the user authentication is carried out by utilizing the screen memo in the systems shown in Figs. 1 and 2.

As mentioned above, the present invention makes it possible to substantially improve the user-friendliness in the case of an access from a portable terminal to a server which requires user authentication, by simplifying a task of the character string input on the display screen of the portable terminal, in which the complex character string input would be troublesome.

While the password of the user is saved only in the portable terminal owned by the user without being saved in other servers such as a gateway server and the like. Furthermore, a key code, which is defined by the user by correlating the key code with each user information i.e. the log-in information specific to each server which requires user authentication such as the password, is necessarily required every the server is utilized. As a consequence, the double security, that is, multiplier effect of security, can be achieved, and the higher safety characteristic (firewall) can be secured against crackers and the like.

As mentioned above, according to the authentication method of the portable terminal of the present invention, the log-in data for access to a server which requires user authentication such as an ID, a password, and a key code or the like are described in Compact HTML, and are saved as the screen memo in the Compact HTML-adaptable portable terminal, so that the password and the like can be securely protected from the crackers and the like.

Furthermore, the contents of the log-in data such as the ID, the password, and the key code, or the like, which are saved as the screen memo in the Compact HTML-adaptable portable terminal, are not displayed on screen of portable terminal and cannot be observed from the outside, so that the higher security characteristic can be ensured.

Additionally, even in the case of accesses via the gateway server to the desired server which requires the user authentication in the system shown in Fig. 2, since the password of the user is not saved in the gateway server, and accordingly the higher security can be ensured with respect to the user information on the side of the gateway server.

The preferred embodiment of the present invention has been disclosed by way of example and it will be understood that other modifications may occur to those skilled in the art without departing from the scope and the spirit of the appended claims.

The features disclosed in the foregoing description, in the claims and/or in the accompanying drawings may, both separately and in any combination thereof, be material for realising the invention in diverse forms thereof.

## Claims

1. An authentication method of a portable terminal, wherein a Compact HTML-adaptable portable terminal (1) equipped with a screen memory function capable of saving into a memory (3) a source file of Compact HTML logs into various kinds of servers (6, 8) which require user authentication and are provided on an information communication network, **characterized in that** said method comprises the steps of:
(a) displaying a user authentication screen for user authentication to be performed by a desired server (6, 8) that requires user authentication, and transmitting log-in information specific to said desired server (6, 8) that was input while said user authentication screen was displayed from said portable terminal (1) to said server (6, 8) via said information communication network;
(b) if the user authentication at step (a) is successful, requesting the input of a key code;
(c) following the step (b), if a key code is input at said portable terminal (1), storing in association with said log-in information said key code that has been input, by means of said screen memory function to carry out a screen memory registration;
(d) after said screen memory registration by step (c), transmitting said log-in information that was stored in association with said key code by means of the screen memory function from said portable terminal (1) to said desired server (6, 8) in response to inputting of said key code; and
(e) logging in said desired server (6, 8) which receives said log-in information and executes the authentication process based upon said log-in information by said portable terminal (1).

2. The authentication method of a portable terminal as claimed in claim 1 wherein:
said log-in information is composed of both a user ID and a password, which are used to log in said desired server (6, 8).

3. The authentication method of a portable terminal as claimed in claim 2 wherein:
contents of such data as the user ID, the password, and the key code, which have been registered in said memory (3) in said portable terminal (1) by means of said screen memory function, are constituted in such a manner that said data content cannot be observed from the outside of said portable terminal (1).

4. The authentication method of a portable terminal as claimed in claim 1, wherein:
said key code is composed of a numeral having a plurality of digits.

5. The authentication method of a portable terminal as claimed in any one of the preceding claims 1 to 4, wherein:
said various kinds of servers (6, 8) which require said user authentication and are provided on the information communication network are connected via a gateway server (7) to said portable terminal (1).

## Patentansprüche

1. Verfahren zur Authentifizierung eines tragbaren Endgerätes, worin sich ein Compact-HTML-anpaßbares tragbares Endgerät (1), das mit einer Bildwiederholspeicherfunktion ausgestattet ist, die zum Speichern einer Compact-HTML-Quelldatei fähig ist, bei zahlreichen Arten von Servern (6, 8), die Benutzerauthentifizierung verlangen und auf einem Informationsdatenübertragungsnetz vorgesehen sind, anmeldet, **dadurch gekennzeichnet, daß** besagtes Verfahren die Schritte umfaßt:
(a) Anzeigen eines Benutzerauthentifizierungsbildschirms zur Durchführung von Benutzerauthentifizierung durch einen gewünschten Server (6, 8), der Benutzerauthentifizierung verlangt, und Übertragen von für genannten gewünschten Server (6, 8) spezieller Anmeldeinformation, die eingegeben wurde, während genannter Benutzerauthentifizierungsbildschirm (1) angezeigt wurde, von genanntem tragbaren Endgerät zu genanntem Server (6, 8) über genanntes Informationsdatenübertragungsnetz;
(b) wenn die Benutzerauthentifizierung in Schritt (a) erfolgreich ist, Anfordern der Eingabe eines Tastencodes;
(c) im Anschluß an den Schritt (b), wenn ein Tastencode bei genanntem tragbaren Endgerät (1) eingegeben worden ist, Speichern von genanntem Tastencode, der eingegeben worden ist, in Kombination mit genannter Anmeldeinformation mittels genannter Bildwiederholspeicherfunktion zur Durchführung einer Bildwiederholspeicherregistrierung;
(d) nach genannter Bildwiederholspeicherregistrierung durch Schritt (c) Übertragen von genannter Anmeldeinformation, die in Verbindung mit genanntem Tastencode mittels der Bildwiederholspeicherfunktion gespeichert wurde, von genanntem tragbaren Endgerät (1) zu genanntem gewünschten Server (6, 8) als Antwort auf die Eingabe von genanntem Tastencode; und
(e) Anmelden bei genanntem gewünschtem Server (6, 8), der genannte Anmeldeinformation empfängt und den Authentifizierungsprozeß auf der Grundlage von genannten Anmeldeinformationen von genanntem tragbaren Endgerät (1) durchführt.

2. Verfahren zur Authentifizierung eines tragbaren Endgerätes nach Anspruch 1, **dadurch gekennzeichnet, daß** genannte Anmeldeinformation aus sowohl einer Benutzer-ID als auch einem Paßwort besteht, die zum Anmelden bei genanntem gewünschten Server (6, 8) verwendet werden.

3. Verfahren zur Authentifizierung eines tragbaren Endgerätes nach Anspruch 2, **dadurch gekennzeichnet, daß** Inhalte von genannten Daten, wie zum Beispiel die Benutzer-ID, das Paßwort und der Tastencode, die in genanntem Speicher (3) in genanntem tragbaren Endgerät (1) mittels genannter Bildwiederholspeicherfunktion registriert worden sind, in einer Weise gebildet werden, daß genannter Dateninhalt nicht von der Außenseite von genanntem tragbaren Endgerät (1) beobachtet werden kann.

4. Verfahren zur Authentifizierung eines tragbaren Endgerätes nach Anspruch 1, **dadurch gekennzeichnet, daß** genannter Tastencode aus einer Zahl mit einer Vielzahl von Ziffern zusammengesetzt ist.

5. Verfahren zur Authentifizierung eines tragbaren Endgerätes nach einem der vorangehenden Ansprüche 1 bis 4, **dadurch gekennzeichnet, daß**
genannte zahlreiche Arten von Servern (6, 8), die genannte Benutzerauthentifizierung verlangen und auf dem Informationsdatenkommunikationsnetz vorgesehen sind, über einen Gateway-Server (7) mit genanntem tragbaren Endgerät (1) verbunden sind.

## Revendications

1. Procédé d'authentification d'un terminal portable, dans lequel un terminal portable adaptable au langage HTML compact (1) équipé d'une fonction de mémoire d'écran capable de sauvegarder dans une mémoire (3) un fichier source de journalisations en langage HTML compact dans divers types de serveurs (6, 8) qui requièrent une authentification de l'utilisateur et sont fournis sur un réseau de communications d'informations, **caractérisé en ce que** ledit procédé comprend les étapes consistant à :
(a) afficher un écran d'authentification d'utilisateur afin qu'une authentification d'utilisateur soit exécutée par un serveur désiré (6, 8) qui requiert une authentification d'utilisateur et transmettre des informations d'établissement de session spécifiques audit serveur désiré (6, 8) qui ont été saisies pendant que ledit écran d'authentification de l'utilisateur était affiché, depuis ledit terminal portable (1) vers ledit serveur (6, 8) par l'intermédiaire dudit réseau de communications d'informations,
(b) si l'authentification de l'utilisateur à l'étape (a) est réussie, demander l'entrée d'un code de clé,
(c) suite à l'étape (b) si un code de clé est appliqué en entrée au niveau dudit terminal portable (1), mémoriser en association avec lesdites informations d'établissement de session ledit code de clé qui a été appliqué en entrée, au moyen de ladite fonction de mémoire d'écran afin d'exécucer un enregistrement de mémoire d'écran,
(d) après ledit enregistrement de mémoire d'écran par l'étape (c), transmettre lesdites informations d'établissement de session qui ont été mémorisées en association avec ledit code de clé au moyen de la fonction de mémoire d'écran depuis ledit terminal portable (1) vers ledit serveur désiré (6, 8), en réponse à l'entrée dudit code de clé, et
(e) établir une session dudit serveur désiré (6, 8) qui reçoit lesdites informations d'établissement de session et exécute le traitement d'authentification sur la base desdites informations d'établissement de session par ledit terminal portable (1).

2. Procédé d'authentification d'un terminal portable selon la revendication 1, dans lequel :
lesdites informations d'établissement de session sont composées à la fois d'un identificateur d'utilisateur et d'un mot de passe, lesquels sont utilisée pour établir une session dudit serveur désiré (6, 8).

3. Procédé d'authentification d'un terminal portable selon la revendication 2, dans lequel :
le contenu de données telles que l'identificateur d'utilisateur, le mot de passe, et le code de clé, qui ont été enregistrés dans ladite mémoire (3) dans ledit terminal portable (1) au moyen de ladite fonction de mémoire d'écran, est constitué d'une manière telle que ledit contenu de données ne peut pas être observé de l'extérieur dudit terminal portable (1).

4. Procédé d'authentification d'un terminal portable selon la revendication 1, dans lequel ;
ledit code de clé est composé d'une valeur numérique comportant une pluralité de chiffres.

5. Procédé d'authentification d'un terminal portable selon l'une quelconque des revendications précédentes 1 à 4, dans lequel :
lesdits divers types de serveurs (6, 8) qui requièrent ladite authentification d'utilisateur et sont fournis sur le réseau de communications d'informations sont connectés par l'intermédiaire d'un serveur de passerelle (7) audit terminal portable (1).
